# EUROPEAN PATENT SPECIFICATION

(11) **EP 3 257 489 B1**
(45) Date of publication and mention of the grant of the patent: **20.02.2019**
(21) Application number: 16305711.0
(22) Date of filing: 13.06.2016
(51) Int. Cl.: A61G 3/00

(54) **BRACKET STRUCTURE FOR SECURING A PORTABLE MEDICAL DEVICE IN AN EMERGENCY VEHICLE**
KLAMMERSTRUKTUR ZUM BEFESTIGEN EINER TRAGBAREN MEDIZINISCHEN VORRICHTUNG IN EINEM EINSATZFAHRZEUG
STRUCTURE DE FIXATION PERMETTANT DE FIXER UN DISPOSITIF MÉDICAL PORTABLE DANS UN VÉHICULE D'URGENCE

(43) Date of publication of application: 20.12.2017
(73) Proprietor: Air Liquide Medical Systems S.p.A., 20148 Milano (IT)
(72) Inventor: BUGATTI, Ottorino, 25068 Sarezzo (IT); ALBERICI, Luca, 25030 Roncadelle (BS) (IT); SANDONI, Giuseppe, 25124 Brescia (IT); FRANZONI, Mattia, 25021 Bagnolo Mella (Bs) (IT)
(74) Representative: Pittis, Olivier

(56) References cited:
- WO-A1-2010/018011
- DE-A1-102008 039 651
- DE-U1- 20 307 442
- US-A1- 2009 250 582

## Description

The invention concerns a bracket structure to be mounted on a wall for supporting a portable medical device, in particular a suction pump device, especially for use in an emergency vehicle, such as an ambulance or similar, as well as an assembly comprising such a bracket structure and a suction pump device or a medical ventilator secured to it.

Bracket structures are commonly used in emergency vehicles, such as ambulances, firefighting rescue vehicles or the like.

They are usually mounted on a wall of the vehicle and are designed for receiving and securing portable medical devices, such as suction pump devices, especially when the vehicle is moving and also in case of accident of the emergency vehicle.

Known bracket structures comprise lock/release mechanisms for securing the device when it has to be stored, for instance when the vehicle is moving, and for releasing the medical device when it has to be used. US 2009/0250582 discloses a bracket mechanism for securing a portable gas tank according to the preamble of claim 1.

However, a problem with known bracket structures is that the lock/release mechanisms are often not fully satisfying.

Indeed, it has been noticed in many cases that some parts of the lock/release mechanisms of the prior art have a tendency to break after some months of use, especially springs or the like that are biased when the medical devices are positioned on the bracket structures.

This leads to undesired releases of the medical devices that can be damaged by their fall on the floor of the vehicle and as medical devices are often fragile.

Further, many known bracket structures do not offer the possibility of supplying electrical power to the medical devices for charging their batteries, while the devices is secured to said bracket structures.

A main goal of the present invention is to provide an improved bracket structure that can be mounted on a wall, especially a wall of an emergency vehicle, such as ambulances, firefighting rescue vehicles or the like, and that can receive and easily secure/release portable medical devices, such as suction pump devices, without encountering the above problem of known devices, especially the issues related to the fall and damage of devices resulting from broken part(s), such as spring(s), of the bracket structure.

A solution according to the present invention as defined by claim 1 concerns a bracket structure for securing a portable medical device, such as a suction pump device or ventilation device, comprising :
- a main body with fixation means for mounting the bracket structure on a wall, and a support structure for receiving and supporting a medical device,
- a lock/release mechanism, arranged on the main body, comprising a mobile arm comprising a hook element for gripping the medical device when installed on the support structure, said mobile arm being actuatable by a user between at least:
   - a rest position wherein the hook element grips and secures the medical device, when a medical device is installed on the support structure, and
   - a release position wherein the hook element release the medical device,
- and at least one spring element cooperating with the mobile arm, said at least one spring element and mobile arm being arranged for returning the mobile arm to the rest position, when said mobile arm is another position than the rest position, characterized in that the mobile arm has a free end comprising the hook element.

Depending on the embodiment, the bracket structure according to the present invention can comprise one or several of the following features:
- said at least one spring element and mobile arm are arranged so that the mobile arm remains in the rest position when said at least one spring element does not exert an elastic return force on said mobile arm.
- said mobile arm remains in the rest position in case of failure of said at least one spring element, for instance when one (or more) spring is broken.
- it comprises two spring elements cooperating with the mobile arm.
- the spring elements are compression springs.
- it comprises a pivoting lever, actuatable by a user, acting on the mobile arm for moving the mobile arm from the rest position to the release position, when actuated by a user, or vice versa.
- the mobile arm translates between the rest position and the release position.
- the fixation means comprise at least two lateral wings integral with the main body and arranged so as to sandwich said main body, said lateral wings being traversed by holes configured for receiving fixing bolts or similar. In other words, the two lateral wings are arranged on the right and left sides of the main body.
- the fixation means further comprise a rear plate integral with the main body, said rear plate being traversed by holes configured for receiving fixing bolts or similar.
- the pivoting lever is pivotably mounted on the rear plate integral with the main body.
- the main body further comprises an electrical connector for connecting a medical device thereto and supplying electrical power to said medical device. The electrical connector is fed in electric power by a power source, like battery(ies), such as the battery of a vehicle.
- the main body further comprises a switch element for controlling the supply of electrical power to the electrical connector.
- the main body further comprises at least one stop wall arranged on the main body and projecting away from said main body so as to constitute a stop for correctly positioning the medical device on the main body.
- the pivoting lever pivots upwardly, when actuated by a user, for translating the mobile arm between the rest position and the release position.
- the two spring elements are fixed, at a first end, to the mobile arm carrying the hook element, and, at a second end, to the main body.
- the two spring elements are progressively compressed when the mobile arm moves between the rest position and the release position, upon actuation by a user of the pivoting lever.
- the main body, pivoting lever, the mobile arm and/or the hook element are made of a metallic material, such as steel.

Further, the invention also concerns an assembly comprising a bracket structure according to the present invention, as described in the present specification and drawings, and a medical device installed on the support structure of said bracket structure, said medical device being gripped by the hook element of the mobile arm of the lock/release mechanism arranged on the main body of said bracket structure.

Preferably, the medical device comprises a fixation means cooperating with the hook element arranged on the mobile arm of the bracket structure so as to maintain the medical device hooked to the bracket structure. For instance, fixation means comprise a lodging arranged in the wall of the peripheral carcass or shell of the medical device.

Furthermore, the invention concerns a vehicle, preferably an emergency vehicle, such as a truck, a car or similar, comprising an inner wall and a bracket structure according to the present invention mounted on said inner wall. Preferably, the bracket structure carries a portable medical device, such as a portable suction pump, that is hold tight by the hook element of the mobile arm of the lock/release mechanism arranged on the main body of said bracket structure.

The medical device can be a suction pump device or medical ventilator, i.e. a ventilation device for providing a respiratory gas, such as air, to a patient in need thereof.

Further, the medical device comprises an electrical plug or socket cooperating with the electrical connector of the main body for supplying electrical power to said medical device. The electrical connector is fed in electric power by a power source, like the battery/ies of the vehicle. In other words, the charge of the battery/ies of the medical device, preferably a portable suction pump, is ensured by the bracket structure according to the present invention mounted that is mounted on the inner wall of an ambulance or any other emergency vehicle, said bracket structure being supplied in electric power by the electrical system of the vehicle, including the battery/ies of the vehicle to which it is electrically connected by electric cables or similar.

Other features, aspects and advantages of the present invention will become apparent from the following detailed description when taken in conjunction with the accompanying drawings which illustrates, by way of examples, the present invention, among which :
- Fig. 1 is a front view of an embodiment of a mounting bracket designed to support a portable suction pump, especially in an emergency vehicle, according to the present invention,
- Fig. 2 is a rearview of the mounting bracket of Fig. 1,
- Fig. 3 shows a suction pump secured to the mounting bracket structure of Fig. 1 and 2,
- Fig. 4 is a scheme of an emergency vehicle equipped with the bracket structure of Fig. 1 to 3.

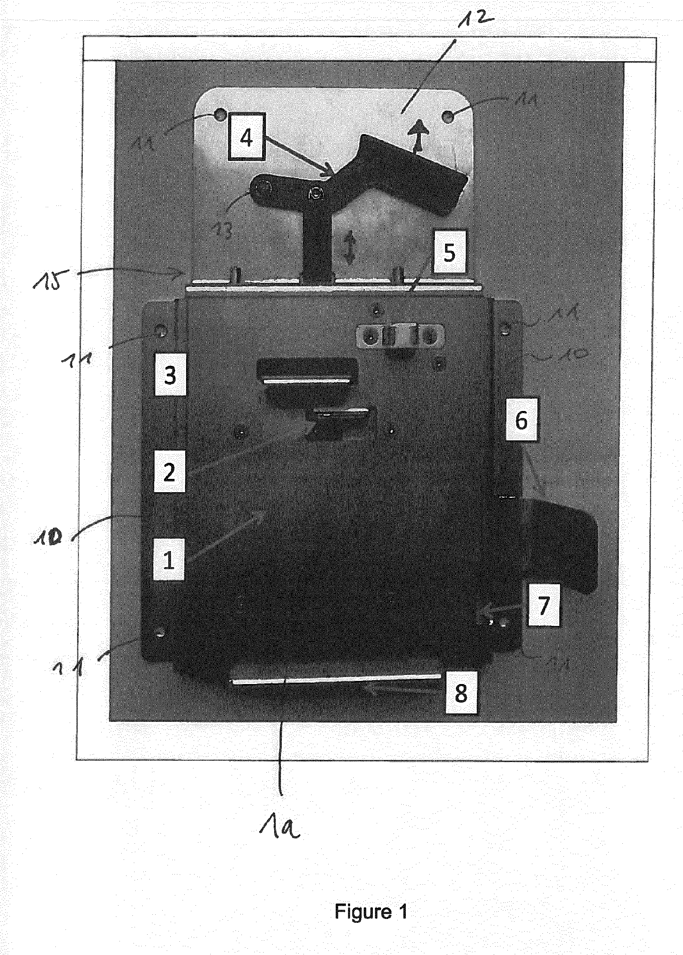

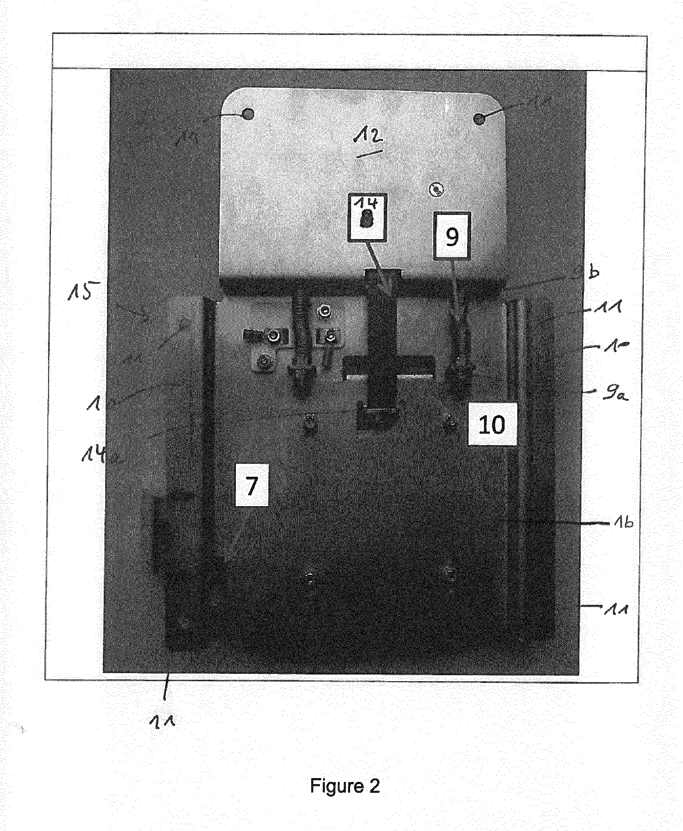

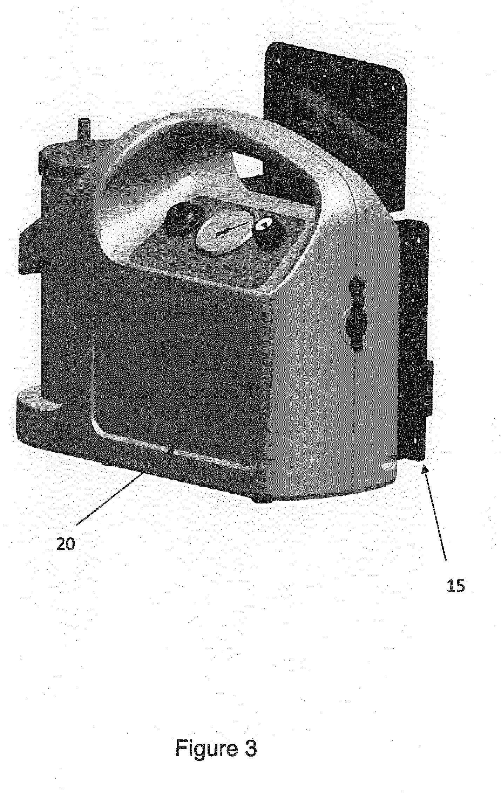

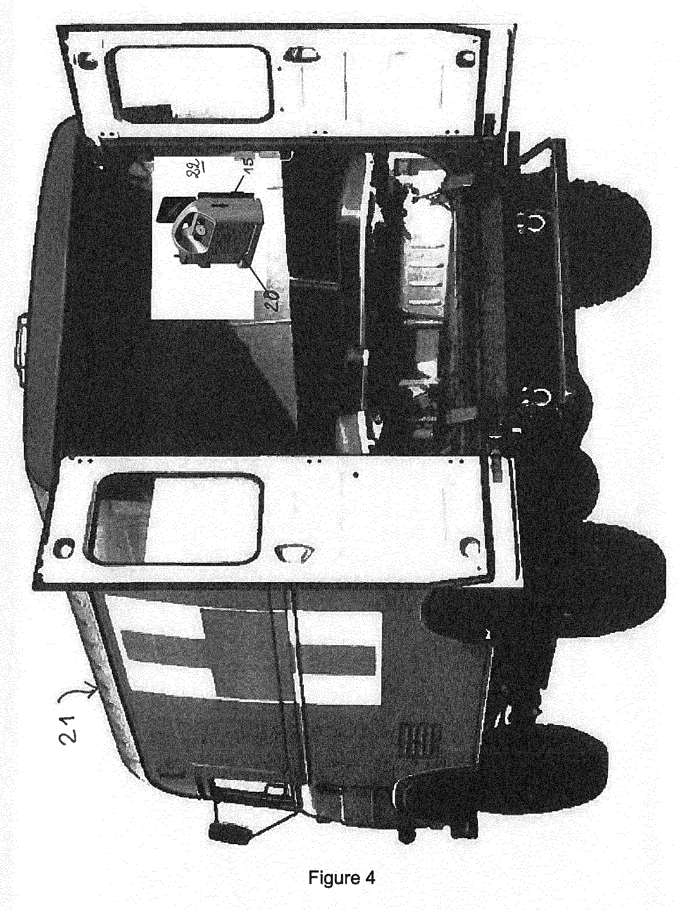

Figures 1 and 2 show an embodiment of a bracket structure 15 designed to support a portable medical device 20, such as a portable suction pump or ventilation device, in an emergency vehicle 21 (see Fig. 4), according to the present invention, whereas Figure 3 shows a bracket structure 15 with a medical device 20 secured to it.

The bracket structure 15 according to the present invention comprises a main body 1 with fixation means 10, 11, such as holes 11 sized for receiving bolts or similar, for mounting the bracket structure 15 on a wall 22 of an emergency vehicle 21 (as shown in Fig. 4), such as an ambulance or similar, and a support structure 8 for receiving and supporting a medical device 20, such as a platform or support arranged on the front face 1a of the main body 1.

The holes 11 can be arranged in two lateral wings 10 and in a rear plate 12 of the main body 1 as illustrated in Figure 1.

The main body 1 is preferably made of metallic material, such as steel or any other suitable material.

A lock/release mechanism 3, 14, arranged on the main body 1, comprising a mobile arml4 terminated by a hook element 3 or structure designed for gripping, i.e. holding, the medical device 20 when it is installed on the support structure 8.

The hook element 3 is preferably mounted in the region of the free end 14a of the mobile arm 14.

The mobile arm 14 can be actuated by a user between at least two positions comprising a rest position wherein the hook element 3 grips and secures the medical device 20, and a release position wherein the hook element 3 release the medical device 20 so that it can be further used by a physician or any other medical staff.

A pivoting lever 4 pivotely fixed on the front face 1a of the main body 1, acts on the mobile arm 14 for moving the mobile arm 14 from the rest position to the release position, when it is actuated by a user, or vice versa.

Actually, the pivoting movement of the pivoting lever 4 around its pivoting axis 13 is converted into a translation movement of the mobile arm 14, i.e. upwardly or downwardly, so as to secure or to release the medical device 20 from the bracket structure 15 of the present invention.

For facilitating the right positioning of the medical device 20 on the platform or support 8 arranged on the front face la of the main body 1, the front face la of the bracket structure 15 further comprises one stop wall 6 projecting away from said front face la of the main body 1 so as to constitute a stop or abutment for limiting the motion of the device 20, when installed on the platform or support 8, thereby allowing a correct and easy positioning of the medical device 20 with respect to the main body 1.

Two springs element 9, arranged on the rear face lb of the main body 1, cooperate with the mobile arm 14 for returning said mobile arm 14 the rest position, when said mobile arm 14 is another position than the rest position, i.e. in the release position or in any intermediary position located between the rest and release positions.

In particular, in case where one of the springs 9 breaks, the mobile arm 14 will stay or be returned by the other spring 9 in its rest position thereby firmly maintaining the medical device 20 in place and avoiding any fall thereof on the floor that would deteriorate it. In other words, thanks to that system, the medical device 20, such as a suction pump, can be secured and stay secured to the bracket 15, even if one of the two springs 9 has a failure. Actually, the two compression springs 9 act so as to push down the arm 14 and hook 3 in the rest position.

Preferably, the main body 1 can comprise on its front face la, an additional hook 2 or similar that cooperates with the device 20 for improving the gripping of the device 20 thereby decreasing the possibility of the unexpected unhooking during the motion of the vehicle 21.

Further, the main body 1 further comprises an electrical connector 5 for connecting the medical device 20 thereto for supplying electrical power to said medical device, and a switch element 7, such as a micro-switch, for controlling the supply of electrical power to the electrical connector 5. Electrical power can be provided by the battery of the vehicle 21. This allows charging of the batteries of the suction pump or other medical device 20, when it is hold on the bracket structure 15 according to the present invention.

The micro-switch 7 allows electric current to be supplied only when the suction pump 20 is installed on the bracket structure 15 according to the present invention thereby avoiding or limiting the potential hazard of electrical shocks.

Figure 4 shows the bracket structure 15 according to the present invention equipped with a medical device 20 mounted on the inner wall 22 of an emergency vehicle 21. The bracket structure 15 is preferably electrically connected to the battery of the vehicle 21.

For allowing the fixing and gripping of the medical device 20 to the bracket structure 15 according to the present invention, fixation means, such as a specific lodging or similar, cooperating with the hook element 3, is arranged in the wall of the peripheral carcass or shell of the medical device 20.

The medical device 20 also comprises an electrical plug or socket cooperating with the electrical connector of the main body 1 for supplying electrical power to said medical device 20, when it is arranged on and gripped by the bracket structure 15 according to the present invention. These electrical plug or socket and electrical connector can be plugged in one to the other as male/female connectors, for allowing electrical power to be supplied to the device 20.

Figure 3 shows a medical device 20, i.e. a suction pump in the present case, arranged on and secured to a mounting bracket structure (cf. Fig. 1 & 2) according to the present invention, especially for use in an emergency vehicle, such as an ambulance or similar (cf. Fig. 4).

## Claims

1. Bracket structure (15) for securing a portable medical device (20) comprising :
- a main body (1) with fixation means (10, 11) for mounting the bracket structure (15) on a wall, and a support structure (8) for receiving and supporting a medical device(20),
- a lock/release mechanism (3, 14), arranged on the main body (1), comprising a mobile arm (14) comprising a hook element (3) for gripping the medical device (20) when installed on the support structure (8), said mobile arm (14) being actuatable by a user between at least:
• a rest position wherein the hook element (3) grips and secures the medical device (20), when a medical device (20) is installed on the support structure (8), and
• a release position wherein the hook element (3) releases the medical device(20),
- and at least one spring element (9) cooperating with the mobile arm (14), said at least one spring element (9) and mobile arm (14) being arranged for returning the mobile arm (14) to the rest position, when said mobile arm (14) is another position than the rest position,
**characterized in that** the mobile arm (14) has a free end (14a) comprising the hook element (3).

2. Bracket structure according to the previous Claim, **characterized in that** said at least one spring element (9) and mobile arm (14) are arranged so that the mobile arm (14) remains in the rest position when said at least one spring element (9) does not exert an elastic return force on said mobile arm (14).

3. Bracket structure according to any one of the previous Claims, **characterized in that** said mobile arm (14) remains in the rest position in case of failure of said at least one spring element (9).

4. Bracket structure according to any one of the previous Claims, **characterized in that** it comprises two spring elements (9) cooperating with the mobile arm (14).

5. Bracket structure according to any one of the previous Claims, **characterized in that** it comprises a pivoting lever (4), actuatable by a user, acting on the mobile arm (14) for moving the mobile arm (14) from the rest position to the release position, when actuated by a user, or vice versa.

6. Bracket structure according to any one of the previous Claims, **characterized in that** the mobile arm (14) translates between the rest position and the release position.

7. Bracket structure according to any one of the previous Claims, **characterized in that** the fixation means (10, 11) comprise :
- at least two lateral wings (10) integral with the main body (1) and arranged so as to sandwich said main body (1), said lateral wings (10) being traversed by holes (11) configured for receiving fixing bolts, and/or
- a rear plate (12) integral with the main body (1), said rear plate (12) being traversed by holes (11) configured for receiving fixing bolts.

8. Bracket structure according to any one of the previous Claims, **characterized in that** the pivoting lever (4) is pivotably mounted on the rear plate (12) integral with the main body (1).

9. Bracket structure according to any one of the previous Claims, **characterized in that** the main body (1) further comprises:
- an electrical connector (5) for connecting a medical device and supplying electrical power to said medical device, and
- a switch element (7) for controlling the supply of electrical power to the electrical connector (5).

10. Bracket structure according to any one of the previous Claims, **characterized in that** the main body (1) further comprises at least one stop wall (6) arranged on the main body (1) and projecting away from said main body (1) so as to constitute a stop for correctly positioning the medical device (20) on the main body (1).

11. Bracket structure according to any one of the previous Claims, **characterized in that** the pivoting lever (4) pivots upwardly, when actuated by a user, for translating the mobile arm (14) between the rest position and the release position.

12. Assembly comprising a bracket structure (15) according to any one of the previous Claims and a medical device installed on the support structure (8) of said bracket structure (15), said medical device (20) being gripped by the hook element (3) of the mobile arm (14) of the lock/release mechanism (3, 14) arranged on the main body (1) of said bracket structure (15).

13. Assembly according to Claim 12, **characterized in that** the medical device (20) comprises a fixation means cooperating with the hook element (3) arranged on the mobile arm (14) of the bracket structure (15) so as to maintain the medical device (20) hooked to the bracket structure (15).

14. Vehicle (21), preferably an emergency vehicle, comprising an inner wall (22) and a bracket structure (15) according to any one of the Claims 1 to 12 mounted on said inner wall (22) and preferably a medical device (20) gripped to the mobile arm (14) of the bracket structure (15).

## Patentansprüche

1. Trägerstruktur (15) zum Befestigen einer tragbaren medizinischen Vorrichtung (20), umfassend:
- einen Hauptkörper (1) mit Fixierungsmitteln (10, 11) zum Anbringen der Trägerstruktur (15) an einer Wand und einer Stützstruktur (8) zum Aufnehmen und Stützen einer medizinischen Vorrichtung (20),
- einen Verriegelungs-/Freigabemechanismus (3, 14), der an dem Hauptkörper (1) angeordnet ist, einen beweglichen Arm (14) umfasst, der ein Hakenelement (3) zum Ergreifen der medizinischen Vorrichtung (20) umfasst, wenn diese an der Stützstruktur (8) installiert ist, wobei der bewegliche Arm (14) von einem Benutzer betätigbar ist, zwischen mindestens:
• einer Ruheposition, in der das Hakenelement (3) die medizinische Vorrichtung (20) ergreift und befestigt, wenn eine medizinische Vorrichtung (20) an der Stützstruktur (8) installiert ist, und
• einer Freigabeposition, in der das Hakenelement (3) die medizinische Vorrichtung (20) freigibt,
- und mindestens ein Federelement (9), das mit dem beweglichen Arm (14) zusammenwirkt, wobei das mindestens eine Federelement (9) und der bewegliche Arm (14) angeordnet sind, den beweglichen Arm (14) in die Ruheposition zurückzubringen, wenn sich der bewegliche Arm (14) in einer anderen Position als der Ruheposition befindet,
**dadurch gekennzeichnet, dass** der bewegliche Arm (14) ein freies Ende (14a) aufweist, das das Hakenelement (3) umfasst.

2. Trägerstruktur nach dem vorstehenden Anspruch, **dadurch gekennzeichnet, dass** das mindestens eine Federelement (9) und der bewegliche Arm (14) derart angeordnet sind, dass der bewegliche Arm (14) in der Ruheposition verbleibt, wenn das mindestens eine Federelement (9) keine elastische Rückstellkraft auf den beweglichen Arm (14) ausübt.

3. Trägerstruktur nach einem der vorstehenden Ansprüche, **dadurch gekennzeichnet, dass** der bewegliche Arm (14) im Falle eines Versagens des mindestens einen Federelements (9) in der Ruheposition verbleibt.

4. Trägerstruktur nach einem der vorstehenden Ansprüche, **dadurch gekennzeichnet, dass** sie zwei Federelemente (9) umfasst, die mit dem beweglichen Arm (14) zusammenwirken.

5. Trägerstruktur nach einem der vorstehenden Ansprüche, **dadurch gekennzeichnet, dass** sie einen von einem Benutzer betätigbaren Schwenkhebel (4) umfasst, der auf den beweglichen Arm (14) wirkt, um den beweglichen Arm (14) von der Ruheposition in die Freigabeposition zu bewegen, wenn er von einem Benutzer betätigt wird, oder umgekehrt.

6. Trägerstruktur nach einem der vorstehenden Ansprüche, **dadurch gekennzeichnet, dass** sich der bewegliche Arm (14) zwischen der Ruheposition und der Freigabeposition verschiebt.

7. Trägerstruktur nach einem der vorstehenden Ansprüche, **dadurch gekennzeichnet, dass** die Fixierungsmittel (10, 11) Folgendes umfassen:
- mindestens zwei seitliche Flügel (10), die in einem Stück mit dem Hauptkörper (1) sind und derart angeordnet sind, dass sie den Hauptkörper (1) sandwichartig einschließen, wobei die seitlichen Flügel (10) von Löchern (11) durchquert sind, die zur Aufnahme von Fixierungsbolzen konfiguriert sind, und/oder
- eine hintere Platte (12), die in einem Stück mit dem Hauptkörper (1) ist, wobei die hintere Platte (12) von Löchern (11) durchquert ist, die zur Aufnahme von Fixierungsbolzen konfiguriert sind.

8. Trägerstruktur nach einem der vorstehenden Ansprüche, **dadurch gekennzeichnet, dass** der Schwenkhebel (4) an der mit dem Hauptkörper (1) einstückigen hinteren Platte (12) schwenkbar angebracht ist.

9. Trägerstruktur nach einem der vorstehenden Ansprüche, **dadurch gekennzeichnet, dass** der Hauptkörper (1) weiter Folgendes umfasst:
- einen elektrischen Verbinder (5) zum Verbinden einer medizinischen Vorrichtung und zum Zuführen von elektrischer Energie zu der medizinischen Vorrichtung, und
- ein Schalterelement (7) zum Steuern der Zufuhr von elektrischer Energie zu dem elektrischen Verbinder (5).

10. Trägerstruktur nach einem der vorstehenden Ansprüche, **dadurch gekennzeichnet, dass** der Hauptkörper (1) weiter mindestens eine Anschlagwand (6) umfasst, die an dem Hauptkörper (1) angeordnet ist und von dem Hauptkörper (1) weg hervorragt, um einen Anschlag zum korrekten Positionieren der medizinischen Vorrichtung (20) auf dem Hauptkörper (1) zu bilden.

11. Trägerstruktur nach einem der vorstehenden Ansprüche, **dadurch gekennzeichnet, dass** der Schwenkhebel (4) nach oben schwenkt, wenn er von einem Benutzer betätigt wird, um den beweglichen Arm (14) zwischen der Ruheposition und der Freigabeposition zu verschieben.

12. Baugruppe umfassend eine Trägerstruktur (15) nach einem der vorstehenden Ansprüche und eine medizinische Vorrichtung, die an der Stützstruktur (8) der Trägerstruktur (15) installiert ist, wobei die medizinische Vorrichtung (20) von dem Hakenelement (3) des beweglichen Arms (14) des Verriegelungs-/Freigabemechanismus (3, 14) ergriffen wird, der an dem Hauptkörper (1) der Trägerstruktur (15) angeordnet ist.

13. Baugruppe nach Anspruch 12, **dadurch gekennzeichnet, dass** die medizinische Vorrichtung (20) ein Fixierungsmittel umfasst, das mit dem Hakenelement (3) zusammenwirkt, das an dem beweglichen Arm (14) der Trägerstruktur (15) angeordnet ist, um die medizinische Vorrichtung (20) festzuhalten, die an der Trägerstruktur (15) eingehakt ist.

14. Fahrzeug (21), vorzugsweise ein Einsatzfahrzeug, umfassend eine Innenwand (22) und eine an der Innenwand (22) angebrachte Trägerstruktur (15) nach einem der Ansprüche 1 bis 12 und vorzugsweise eine medizinische Vorrichtung (20), die den beweglichen Arm (14) der Trägerstruktur (15) ergreift.

## Revendications

1. Structure-support (15) pour arrimer un dispositif médical portable (20) comprenant :
- un corps principal (1) avec des moyens de fixation (10, 11) pour monter la structure-support (15) sur une paroi, et une structure de support (8) pour recevoir et supporter un dispositif médical (20),
- un mécanisme de verrouillage/libération (3, 14), agencé sur le corps principal (1), comprenant un bras mobile (14) comprenant un élément formant crochet (3) pour saisir le dispositif médical (20) lorsqu'il est installé sur la structure de support (8), ledit bras mobile (14) pouvant être actionné par un utilisateur entre au moins :
une position de repos dans laquelle l'élément formant crochet (3) saisit et arrime le dispositif médical (20), lorsqu'un dispositif médical (20) est installé sur la structure de support (8), et
une position de libération dans laquelle l'élément formant crochet (3) libère le dispositif médical (20),
- et au moins un élément formant ressort (9) coopérant avec le bras mobile (14), ledit au moins un élément formant ressort (9) et ledit bras mobile (14) étant agencés pour ramener le bras mobile (14) dans la position de repos, lorsque ledit bras mobile (14) est une autre position que la position de repos,
**caractérisé en ce que** le bras mobile (14) présente une extrémité libre (14a) comprenant l'élément formant crochet (3).

2. Structure-support selon la revendication précédente, **caractérisée en ce que** ledit au moins un élément formant ressort (9) et le bras mobile (14) sont agencés de sorte que le bras mobile (14) reste dans la position de repos lorsque ledit au moins un élément formant ressort (9) n'exerce pas de force de rappel élastique sur ledit bras mobile (14).

3. Structure-support selon l'une quelconque des revendications précédentes, **caractérisée en ce que** ledit bras mobile (14) reste dans la position de repos en cas de défaillance dudit au moins un élément formant ressort (9).

4. Structure-support selon l'une quelconque des revendications précédentes, **caractérisée en ce qu'**elle comprend deux éléments formant ressorts (9) coopérant avec le bras mobile (14).

5. Structure-support selon l'une quelconque des revendications précédentes, **caractérisée en ce qu'**elle comprend un levier pivotant (4), pouvant être actionné par un utilisateur, agissant sur le bras mobile (14) pour déplacer le bras mobile (14) de la position de repos à position de libération, lorsqu'il est actionné par un utilisateur, ou vice versa.

6. Structure-support selon l'une quelconque des revendications précédentes, **caractérisée en ce que** le bras mobile (14) se déplace entre la position de repos et la position de libération.

7. Structure-support selon l'une quelconque des revendications précédentes, **caractérisée en ce que** les moyens de fixation (10, 11) comprennent :
- au moins deux ailes latérales (10) solidaire du corps principal (1) et agencées pour enserrer ledit corps principal (1), lesdites ailes latérales (10) étant traversées par des trous (11) configurés pour recevoir des boulons de fixation, et/ou
- une plaque arrière (12) solidaire du corps principal (1), ladite plaque arrière (12) étant traversée par des trous (11) configurés pour recevoir des boulons de fixation.

8. Structure-support selon l'une quelconque des revendications précédentes, **caractérisée en ce que** le levier pivotant (4) est monté de manière pivotante sur la plaque arrière (12) solidaire du corps principal (1).

9. Structure-support selon l'une quelconque des revendications précédentes, **caractérisée en ce que** le corps principal (1) comprend en outre :
- un connecteur électrique (5) pour connecter un dispositif médical et alimenter ledit dispositif médical en énergie électrique, et
- un élément de commutation (7) destiné à commander l'alimentation du connecteur électrique (5) en énergie électrique.

10. Structure-support selon l'une quelconque des revendications précédentes, **caractérisée en ce que** le corps principal (1) comprend en outre au moins une paroi d'arrêt (6) agencée sur le corps principal (1) et faisant saillie dudit corps principal (1) pour constituer un arrêt permettant de positionner correctement le dispositif médical (20) sur le corps principal (1).

11. Structure-support selon l'une quelconque des revendications précédentes, **caractérisée en ce que** le levier pivotant (4) pivote vers le haut, lorsqu'il est actionné par un utilisateur, pour déplacer le bras mobile (14) en translation entre la position de repos et la position de libération.

12. Ensemble comprenant une structure-support (15) selon l'une quelconque des revendications précédentes et un dispositif médical installé sur la structure de support (8) de ladite structure-support (15), ledit dispositif médical (20) étant saisi par l'élément formant crochet (3) du bras mobile (14) du mécanisme de verrouillage/déverrouillage (3, 14) agencé sur le corps principal (1) de ladite structure-support (15).

13. Ensemble selon la revendication 12, **caractérisé en ce que** le dispositif médical (20) comprend des moyens de fixation coopérant avec l'élément formant crochet (3) agencés sur le bras mobile (14) de la structure-support (15) afin de maintenir le dispositif médical (20) accroché à la structure-support (15).

14. Véhicule (21), de préférence un véhicule d'urgence, comprenant une paroi interne (22) et une structure-support (15) selon l'une quelconque des revendications 1 à 12, montée sur ladite paroi interne (22) et de préférence un dispositif médical (20) saisi sur le bras mobile (14) de la structure-support (15).
